# EUROPEAN PATENT APPLICATION

(11) **EP 4 803 484 A1**
(43) Date of publication of application: **09.09.2026**
(21) Application number: 24885508.2
(22) Date of filing: 21.10.2024
(51) Int. Cl.: C01B 32/36, B01D 53/08, B01J 20/34

(54) **METHOD AND SYSTEM FOR REGENERATING ACTIVATED CARBON**

(30) Priority: 02.11.2023 JP 2023188705
(71) Applicant: Kurita Water Industries Ltd., Tokyo 164-0001 (JP)
(72) Inventor: KANEKO, Jun, Tokyo 164-0001 (JP)
(74) Representative: TBK
(86) International application number: PCT/JP2024/037341
(87) International publication number: WO 2025/094735

(57) **Abstract**

Spent powdered activated carbon is regenerated by microwave heating to recover and improve adsorption performance. The regeneration method of activated carbon includes a step of placing activated carbon having an average particle size of 1 to 100 µm on a flat plate, and a step of regenerating the activated carbon on the flat plate by microwave heating. During microwave heating, forward and backward movement of the flat plate may be repeatedly performed by a belt conveyor or a roller conveyor. The temperature of the activated carbon during microwave heating may be measured, and microwave irradiation energy may be controlled based on the measurement results.

## Description

### Technical Field

The present invention relates to a regeneration method and regeneration system for desorbing and separating substances adsorbed on spent activated carbon from the activated carbon by microwave heating to recover the adsorption performance of the activated carbon.

### Related Art

As regeneration furnaces for performing regeneration treatment of activated carbon, multistage furnace type regeneration furnaces for large furnaces in which cylindrical furnace chambers are stacked in 4 to 8 stages, rotary kiln type regeneration furnaces for medium-sized furnaces, and direct current heating type regeneration furnaces for small furnaces that are heated by electrode energization have become widespread. Currently, all regeneration furnaces in Japan use an external heating method that uses fossil fuels such as heavy oil and gas as heat sources. In the case of regenerating activated carbon by external heating, heat propagation to the interior occurs by heat conduction, so thermal conductivity is low. Therefore, external heating becomes inefficient for heating objects with large volumes, and heating time requires a long time.

In conventional heating furnace activated carbon regeneration devices, there are limitations on the particle size that may be regenerated. That is, in the case of regenerating powder products finer than 40 mesh (0.56 mm), particularly powdered activated carbon having a particle size distribution of 1 to 100 µm, problems occur due to dust scattering, so application to actual devices has not been performed. Therefore, granular activated carbon with large particle size may be recovered after adsorption and regenerated by heating in a regeneration furnace for reuse. However, powdered activated carbon with small particle size, after using new material, was recovered as solid-liquid separation material or dehydrated cake by filtration treatment and disposed of as industrial waste treatment. Alternatively, spent powdered activated carbon was taken for use as livestock feed or soil fertilizer, and was diverted to applications with low added value.

In recent years, with the increasing need for carbon neutralization initiatives by 2050 and the penetration of the concept of carbon circular economy, research on microwave heating regeneration that enables conversion to non-fossil energy has been advancing. The regeneration method using microwave heating can achieve internal heating in a short time without heat conduction because microwave electric fields penetrate the target heating object and are converted to thermal energy from the inside.

However, microwave heating had problems in that countermeasures against heating unevenness were insufficient in the process of scaling up to actual plants, and the recovery performance value of regenerated activated carbon was low.

As a activated carbon regeneration method using microwave heating, Patent Document 1 describes a method in which spent activated carbon is stored in a cylindrical heating container while providing empty space greater than the spent activated carbon volume, thereby enabling uniform microwaves to be incident on the activated carbon.

Patent Document 2 describes a regeneration method in which warm water is blown in to remove carbonized substances of organic matter desorbed from spent activated carbon by microwave heating regeneration, and a blow-out removal effect is provided by volume expansion in the case of becoming steam.

Patent Document 3 describes a method in which activated carbon is disposed in a circulation path, the activated carbon is heated by microwaves to desorb adsorbate from the activated carbon to regenerate the activated carbon, and a mixed gas of inert gas circulating through the circulation path and desorbed adsorbate gas is cooled and condensed to separate and recover the adsorbate.

### Citation List

### Patent Literature

Patent Document 1: Japanese Patent Application Laid-Open Publication No. 2001-89120
Patent Document 2: Japanese Patent Application Laid-Open Publication No. 2001-89121
Patent Document 3: Japanese Patent Application Laid-Open Publication No. H6-31163

### SUMMARY OF INVENTION

### Technical Problem

The present invention has an object to provide a regeneration method and regeneration system that may regenerate spent powdered activated carbon by microwave heating and recover and improve adsorption performance.

### Solution to Problem

[1] An activated carbon regeneration method, including:
   a step of placing activated carbon having an average particle size of 1 to 100 µm on a flat plate; and
   a step of regenerating the activated carbon on the flat plate by microwave heating.
[2] The activated carbon regeneration method according to [1], in which forward and backward movement of the flat plate is repeatedly performed by a belt conveyor or roller conveyor during microwave heating.
[3] The activated carbon regeneration method according to [1], in which a temperature of the activated carbon during microwave heating is measured, and microwave irradiation energy is controlled based on measurement results.
[4] The activated carbon regeneration method according to [1], in which the activated carbon is subjected to microwave heating in a heating treatment box having an oxygen concentration of 2% or less.
[5] The activated carbon regeneration method according to [4], in which exhaust gas from the heating treatment box is treated, and the treated gas is supplied to the heating treatment box.
[6] The activated carbon regeneration method according to [1], in which microwave heating is performed after making a height of the activated carbon on the flat plate constant by a leveling board.
[7] An activated carbon regeneration system, including:
   a hopper that supplies activated carbon having an average particle size of 1 to 100 µm onto a flat plate;
   a leveling board that adjusts a height of the activated carbon on the flat plate to be constant;
   a transport part that transports the flat plate on which the activated carbon is placed to a heating treatment box; and
   a microwave generator that irradiates microwaves into the heating treatment box.
[8] The activated carbon regeneration system according to [7], in which the transport part has a belt conveyor or a roller conveyor, and repeatedly performs forward and backward movement of the flat plate on which the activated carbon is placed inside the heating treatment box during microwave irradiation.

### Effects of Invention

According to the present invention, spent powdered activated carbon may be regenerated by microwave heating, and adsorption performance can be recovered and improved.

### BRIEF DESCRIPTION OF DRAWINGS

[FIG. 1] FIG. 1 is a schematic configuration diagram of an activated carbon regeneration system according to an embodiment of the invention.
[FIG. 2] FIG. 2 is a functional block diagram of the control device.
[FIG. 3] FIG. 3 is a graph showing an example of changes in microwave irradiation energy during activated carbon regeneration treatment.
[FIG. 4] FIG. 4 is a graph showing an example of temperature changes during activated carbon regeneration treatment.

### DESCRIPTION OF THE EMBODIMENTS

Hereinafter, embodiments will be described with reference to the drawings.

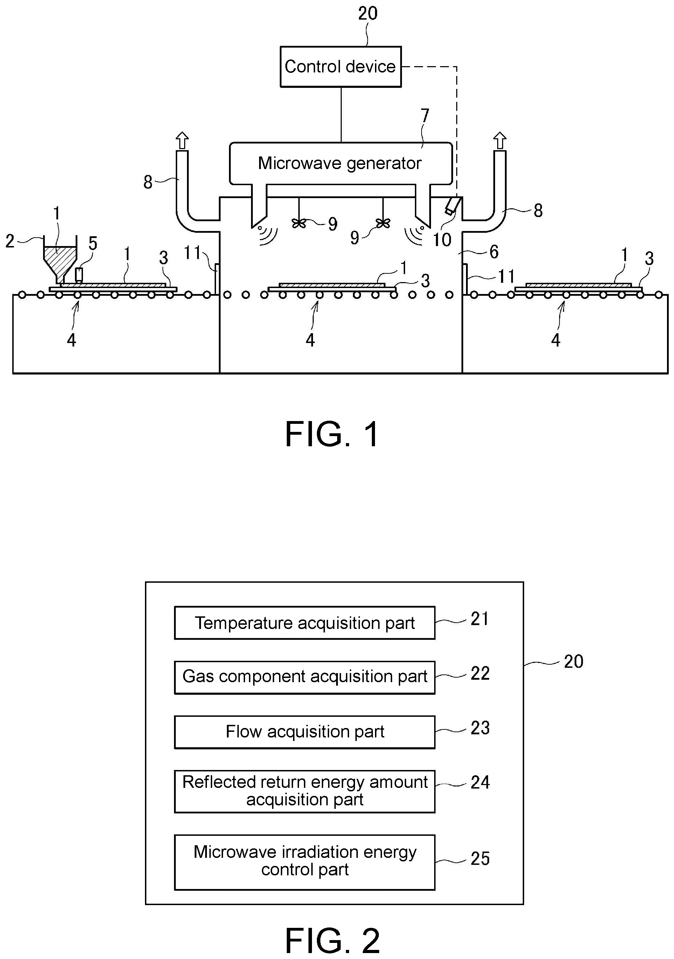

The activated carbon regeneration system according to the embodiment of the invention shown in FIG. 1 irradiates spent activated carbon with microwaves for heating regeneration, and is particularly suitable for regeneration of powdered activated carbon having small particle size.

A spent activated carbon 1 to be regenerated is supplied from a hopper 2 onto a board 3. The activated carbon 1 is powdered activated carbon having an average particle size of 1 to 100 µm. The average particle size of the powdered activated carbon may be the median diameter D₅₀ measured by a laser diffraction particle size distribution analyzer, or may be an average value of particle sizes observed by scanning transmission electron microscopy.

There is no particular limitation on the spent activated carbon 1 to be regenerated, but for example, it is spent activated carbon having an iodine adsorption performance of 50 to 1800 mg/g and a specific surface area of 300 to 2000 m²/g.

The board 3 is made of quartz or metal such as SUS. The board 3 is, for example, a flat plate having a rectangular shape in plan view. The dimensions of the board 3 are not particularly limited. A substantially rectangular frame is provided on one main surface (surface) of the board 3, and the activated carbon 1 supplied from the hopper 2 is spread inside the frame.

The board 3 on which the activated carbon 1 is loaded is transported to a heating treatment box 6 by a transport part 4. The transport part 4 is, for example, a belt conveyor or roller conveyor.

A leveling board 5 is provided in the vicinity of the hopper 2, and as the board 3 moves, the spread height of the activated carbon 1 inside the frame becomes constant.

When the board 3 is transported into the heating treatment box 6, a microwave leakage prevention shutter 11 closes, and the inside of the box 6 becomes a sealed space.

A microwave generator 7 is connected to the heating treatment box 6. Microwaves generated by the microwave generator 7 are guided into the heating treatment box 6 to heat the activated carbon 1 (and the board 3).

Microwaves are irradiated from multiple locations at the upper part of the heating treatment box 6. As the microwave source, one having a frequency of 2.45 GHz and a maximum output of about 24 kW is used. An example of the microwave source includes a microwave oven.

A control device 20 controls the irradiation energy of the microwaves. The control method will be described later.

The heating treatment box 6 may be provided with a sensor (not shown) that measures the reflected return energy of microwaves. Additionally, an instrument using the principle of a differential thermal analyzer that may measure carbonization and carbon dioxide formation of adsorbate may be installed.

A propeller 9 that uniformly reflects microwaves may be installed inside the heating treatment box 6. The propeller 9 is made of metal such as SUS. The number of blades of the propeller 9 is not limited, and is, for example, about 2 to 5 blades. Multiple propellers 9 may be installed.

During microwave irradiation, inside the heating treatment box 6, the transport part 4 may reciprocate the board 3 back and forth at a low speed that does not cause the powdered activated carbon to scatter (repeating forward and backward movement) to suppress heating unevenness.

Exhaust gas generated with heating of the activated carbon 1 is discharged from an exhaust pipe 8 connected to the heating treatment box 6 by a blower (not shown). The exhaust gas discharged from the exhaust pipe 8 has its TOC (total organic carbon) and moisture concentration measured by a gas analyzer (not shown). The exhaust pipe 8 is provided with a gas flow meter (not shown) that measures the ventilation flow rate of the blower.

The heating treatment box 6 is connected to a supply pipe (not shown) that supplies nitrogen gas, superheated steam, or carbon dioxide gas.

The exhaust gas discharged from the exhaust pipe 8 is treated using known exhaust gas treatment methods such as scrubber treatment or plasma treatment. Since the treated gas has a low oxygen concentration, it is preferable to return it to the heating treatment box 6 again. By maintaining a low oxygen concentration state (for example, 0.2% or less) inside the heating treatment box 6, discharge of carbon components as carbon dioxide to outside the system can be suppressed, and the recovery rate of the regenerated product can be improved.

The heating treatment box 6 is equipped with an infrared camera 10 that measures the temperature of the activated carbon 1 on the board 3. A heat conduction type thermometer that measures the temperature of the activated carbon 1 may be provided.

When the regeneration treatment of the activated carbon 1 is completed, the microwave leakage prevention shutter 11 opens, and the board 3 is carried out from the heating treatment box 6. The regenerated activated carbon 1 is recovered from the board 3.

The control device 20 is a computer having a CPU and memory. As shown in FIG. 2, the control device 20 has functions of a temperature acquisition part 21, a gas component acquisition part 22, a flow acquisition part 23, a reflected return energy amount acquisition part 24, and a microwave irradiation energy control part 25.

The temperature acquisition part 21 acquires the temperature of the activated carbon 1 during regeneration treatment from the infrared camera 10 or the like.

The gas component acquisition part 22 acquires analysis results of TOC and moisture concentration of the exhaust gas from a gas analyzer.

The flow acquisition part 23 acquires measurement results of the ventilation flow rate of the blower from a gas flow meter.

The reflected return energy amount acquisition part 24 acquires measurement results of the reflected return energy amount of microwaves. The consumed energy amount of microwaves is obtained from the difference between the irradiation energy amount and the reflected return energy amount.

The activated carbon regeneration method according to this embodiment includes a drying step for removing moisture from spent activated carbon, a calcination desorption step for calcining and desorbing substances (adsorbate) adsorbed on the activated carbon, a reactivation step for gasifying residual carbonized adsorbate, and a cooling step for cooling the activated carbon.

The microwave irradiation energy control part 25 determines the state of the activated carbon 1 based on the temperature of the activated carbon 1, exhaust gas components, and the like, decides which step among the drying step, calcination desorption step, reactivation step, and cooling step to execute, and outputs a control signal to the microwave generator 7 such that the irradiation energy corresponds to the step.

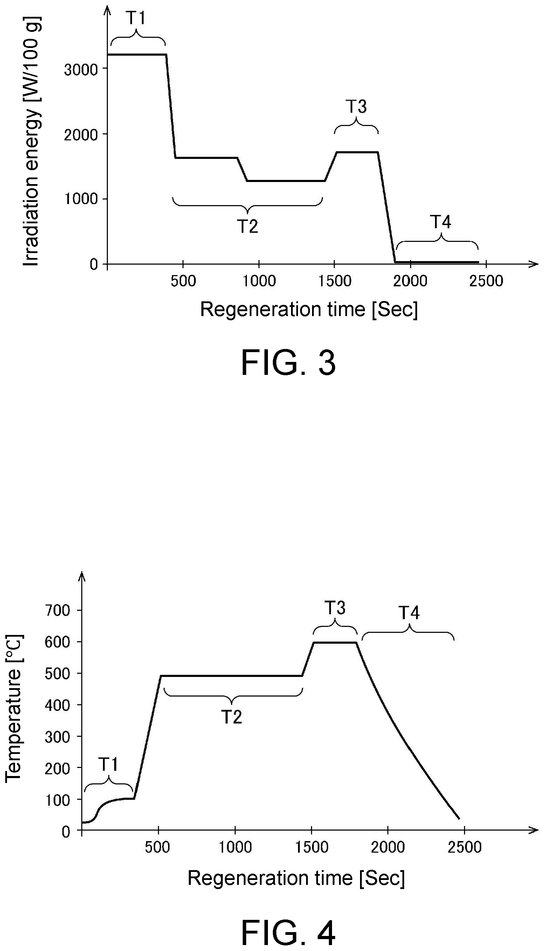

FIG. 3 shows an example of changes in microwave irradiation energy during regeneration treatment. FIG. 4 shows an example of changes in temperature of the powdered activated carbon 1 during regeneration treatment.

After performing nitrogen purge of the heating treatment box 6, microwave irradiation is started and the drying step is performed (period T1 in FIG. 3 and FIG. 4). In the drying step, the temperature of the activated carbon rises due to microwave irradiation, initial moisture evaporates, and the temperature becomes constant at around 100°C.

In response to the moisture content of the activated carbon evaporating and disappearing and the drying step ending, the temperature rises rapidly above 100°C. The microwave irradiation energy is reduced to maintain the regeneration temperature at a predetermined temperature, and the calcination desorption step is performed (period T2 in FIG. 3 and FIG. 4). The predetermined regeneration temperature in the calcination desorption step is set to an optimal temperature according to the amount of adsorbate and the carbonization rate. For example, the calcination desorption step is performed in a temperature range of 200 to 1400°C, preferably 500 to 1200°C.

In the initial stage of the calcination desorption step, microwave energy is used for the desorption reaction of the adsorbate. In the latter half of the calcination desorption step (period T2) in which desorption of the adsorbate has progressed to some extent, the irradiation energy is adjusted to be somewhat lower to maintain the temperature of the activated carbon constant. For example, the irradiation energy in the latter half of the calcination desorption step is adjusted to about 80 to 95% of the irradiation energy in the first half.

In response to determining from the analysis results of exhaust gas that the component of adsorbate in the exhaust gas becomes below a predetermined value and the calcination desorption step has ended, the irradiation energy is increased to raise the regeneration temperature, and the reactivation step is performed (period T3 in FIG. 3 and FIG. 4). The end of the calcination desorption step may be determined by monitoring the carbonization removal status based on differential thermal measurement values or the amount of microwave energy consumption.

In the reactivation step, the adsorbate that remained and carbonized in the calcination desorption step is brought into contact with superheated steam, carbon dioxide gas, or oxidizing gases such as oxygen to gasify it (water gas reaction), and discharged from the exhaust pipe 8. For example, the irradiation energy in the reactivation step is set slightly higher than the irradiation energy in the calcination desorption step and lower than the irradiation energy in the drying step.

It is known that the gasification loss of the activated carbon itself may be used as a guideline for the upper limit in determining the temperature and residence time of reactivation conditions. The higher the temperature, the more exponentially the residence time may be shortened.

In response to determining from the analysis results of exhaust gas that the component of adsorbate in the exhaust gas becomes below a predetermined value and the reactivation step has ended, microwave irradiation is stopped and the cooling step is performed (period T4 in FIG. 3 and FIG. 4), cooling the activated carbon to 100°C or below. To avoid rapid temperature drop, gradual cooling is performed to lower the temperature by ventilation using a blower in a nitrogen purge atmosphere or a low oxygen atmosphere of 2% or less. For ventilation, exhaust gas after scrubber treatment may be circulated.

Through such regeneration treatment, spent powdered activated carbon may be restored to adsorption performance equivalent to new material.

By applying similar treatment to new powdered activated carbon, the adsorption performance can be further improved.

In the present embodiment, the powdered activated carbon to be regenerated is placed on the board 3 and leveled to a constant thickness before microwave irradiation, thereby suppressing ignition and heating unevenness associated with scattering of fine powder.

In the present embodiment, the temperature of the activated carbon on the board 3 and the exhaust gas components during regeneration treatment are monitored by instruments, and the microwave irradiation energy is controlled, thereby improving the quality of the regenerated product.

By enabling the regeneration of powdered carbon, it becomes possible to reuse it as high added value regenerated powdered carbon in food process steps, making cost reduction possible compared to using new carbon.

In conventional activated carbon regeneration treatment by heat propagation from external heating, in addition to heating the spent activated carbon, heat loss occurs due to heating of the heating furnace device itself and heat propagation to the surroundings. However, in microwave irradiation according to the present embodiment, the activated carbon 1 is directly heated, and heat propagation is mainly to the board 3 in contact with the activated carbon 1, thereby enabling efficient heating regeneration. Therefore, the CO2 generation amount converted from electric power consumption by microwave heating is expected to be significantly reduced compared to the CO2 generation amount converted from fossil energy such as gas and heavy oil by conventional external heating methods.

Heating regeneration by microwave irradiation enables conversion to non-fossil energy, and depending on the type of electric power used, carbon neutralization becomes possible.

With heating regeneration by microwave irradiation, reduction of CO2 generation through regeneration and reuse of spent activated carbon, or secondarily, reduction as a carbon footprint in customers' manufactured products can be expected.

Conventionally, the regeneration control temperature was uniformly managed in the temperature range of 800 to 850°C with versatility, but in the present embodiment, the optimal regeneration temperature may be set from differential thermal measurement and desorption end point prediction, enabling regeneration even at 500 to 600°C. Therefore, energy saving of thermal energy becomes possible.

In the above embodiment, the spent powdered activated carbon to be regenerated may be powdered activated carbon alone, or may be in a state where filter media used for precoat filtration applied to decolorization processes or other target adsorption treatment processes, for example, diatomaceous earth powder products, are mixed. It is desirable that the mixture of powdered activated carbon and powdered diatomaceous earth has sufficiently reduced moisture content. The moisture content is preferably 80% or less, and more preferably 50% or less.

According to the activated carbon regeneration system according to the above embodiment, regeneration of powdered activated carbon having an average particle size of 1 to 100 µm of spent powdered activated carbon may be performed. However, the activated carbon regeneration system according to the above embodiment is also applicable to regeneration treatment of crushed type or pellet type granular activated carbon having a particle size of 100 µm or more (100 µm to 10 mm). According to the activated carbon regeneration system according to the above embodiment, conversion to non-fossil energy in regeneration of various spent activated carbon becomes possible without being limited by particle size, and significant reduction of CO2 generation amount becomes possible.

The activated carbon regeneration system according to the above embodiment has been described regarding a configuration in which the board 3 on which the powdered activated carbon 1 is placed is reciprocated by a belt conveyor or the like inside the heating treatment box 6 to suppress heating unevenness, but the board 3 may be rotated by a turntable.

The adsorbent to be regenerated is not limited to carbon-based adsorbents including activated carbon and activated carbon fiber materials, but may be zeolite, silica gel, alumina, or the like.

### Examples

Next, the present invention will be described in further detail by way of examples. The invention is not limited to these examples.

### [Example 1]

As a sample of spent adsorbent, a mixed product (moisture content 40%) with a weight ratio of 9:1 of powdered activated carbon (average particle size 37 µm) after adsorbing organic substances and diatomaceous earth powder product (average particle size 24 µm) after filtration treatment was prepared. The iodine adsorption performance of this sample before regeneration was 170 mg/g. A rectangular frame (external dimensions 100 mm × 100 mm × height 20 mm, thickness 10 mm) was provided on a quartz flat plate (130 mm × 130 mm × 10 mm). 50.31 g of the sample was spread inside this frame to an even height and placed on a turntable inside a microwave irradiation box (400 mm × 400 mm × 400 mm).

After performing nitrogen purge at a flow rate of 10 L/min for 5 minutes in the microwave irradiation box, microwave heating regeneration was started. Microwaves were irradiated while rotating the turntable at 7 rpm. The blower flow rate for discharging desorbed gas outside the system was set to 4.5 m³/min. The microwave irradiation energy was sequentially changed to 1000 W for 180 seconds, 500 W for 660 seconds, 700 W for 180 seconds, 900 W for 300 seconds, and 1000 W for 180 seconds.

At the blower outlet that discharges gas from the microwave irradiation box to outside the system, steam and the odor of desorbed components were confirmed at the point when the temperature rose to 100°C. At the point when the temperature rose to 600°C, desorbed gas was emitting white smoke along with a burnt smell. Thereafter, the temperature was maintained, the white smoke subsided, and then the burnt smell gradually disappeared. The test was terminated at the point when the odor sufficiently subsided. In the initial stage when white smoke began to appear, it is considered that not only vaporization of adsorbates but also carbonization of desorbed components began. Thereafter, at the point when the odor disappeared, it is considered that almost all adsorbates were desorbed from the spent activated carbon and diatomaceous earth.

The sample after heating regeneration was recovered, and weight and iodine adsorption performance were measured. The measurement results are shown in Table 1. It was confirmed that the iodine adsorption performance recovered to 580 mg/g.

### [Example 2]

Heating regeneration of Example 2 was performed in the same manner as Example 1, except that 70.01 g of sample was spread inside the frame, and the microwave irradiation energy was sequentially changed to 1000 W for 780 seconds, 1200 W for 120 seconds, and 1400 W for 900 seconds. The measurement results are shown in Table 1. It was confirmed that the iodine adsorption performance recovered to 580 mg/g.

### [Example 3]

A square-shaped frame (external dimensions 200 mm × 200 mm × 20 mm, width dimension 10 mm) was provided on a SUS board of 380 mm × 380 mm × 2 mm. 1205 g of sample was spread inside this frame. At the four corner portions of the frame, the sample was gathered to form an arc shape with a radius of curvature of 30 mm to avoid local heating.

The SUS board on which the sample was placed was fixed at the center of the lower part of a microwave irradiation box (length 700 mm, width 1500 mm, height 1200 mm) as a belt conveyor type. To enable uniform microwave irradiation, propellers (70 mm × 150 mm × 4 blades) installed at 45-degree angles at two locations in the upper part were rotated at 7 rpm. The blower flow rate for discharging desorbed gas was set to 7.5 m³/min. The microwave irradiation energy was changed to 2000 W for 1800 seconds, 1000 W for 420 seconds, 2000 W for 300 seconds, and 2500 W for 780 seconds. The test was terminated at the point when the odor of exhaust gas sufficiently disappeared.

The sample after heating regeneration was recovered, and weight and iodine adsorption performance were measured. The measurement results are shown in Table 1. It was confirmed that the iodine adsorption performance recovered to 530 mg/g.

### [Example 4]

Heating regeneration of Example 4 was performed in the same manner as Example 3, except that 1200 g of sample was spread inside the frame, the sample was gathered inward at the four corners to form a circular shape in 30 mm squares to avoid local heating, and the microwave irradiation energy was changed to 2000 W for 1740 seconds, 1000 W for 420 seconds, 3500 W for 240 seconds, and 4500 W for 900 seconds. The measurement results are shown in Table 1. It was confirmed that the iodine adsorption performance recovered to 600 mg/g.

### [Example 5]

Heating regeneration of Example 5 was performed in the same manner as Example 1, except that granular activated carbon (average particle size 37 µm, moisture content 10%, iodine adsorption performance before regeneration 790 mg/g) that adsorbed the same organic matter as the powdered activated carbon included in the sample of Example 1 was used as the sample, 50.73 g was spread inside the frame, and the microwave irradiation energy was changed to 1000 W for 150 seconds and 500 W for 900 seconds.

The sample after heating regeneration was recovered, and weight and iodine adsorption performance were measured. The measurement results are shown in Table 1. It was confirmed that the iodine adsorption performance recovered to 900 mg/g.

### [Example 6]

Microwave heating of Example 6 was performed in the same manner as Example 1, except that the sample was new powdered activated carbon (average particle size 34 µm). The sample after heating was recovered, and weight and iodine adsorption performance were measured. The measurement results are shown in Table 1. The iodine adsorption performance improved from 1000 mg/g for new powdered activated carbon to 1070 mg/g after heating. This is considered to be due to further development of micropores by microwave heating.

### [Comparative Example 1]

A cylindrical rotating drum (φ200 mm, height 100 mm) simulating a rotary kiln heating furnace was installed at an angle of 45° inside a microwave irradiation box (400 mm × 400 mm × 400 mm). 390.49 g of the same sample as Example 1 was placed in this rotating drum. After performing nitrogen purge at a flow rate of 10 L/min for 5 minutes in the microwave irradiation box, microwave heating regeneration was started while rotating the rotating drum at a rotation speed of 3 rpm.

The microwave irradiation energy was sequentially changed to 2000 W for 660 seconds, 1000 W for 60 seconds, and 1200 W for 210 seconds, maintaining the temperature inside the rotating drum at approximately 500 to 600°C.

In this regeneration test, powder scattered together with desorbed gas from the spent activated carbon and diatomaceous earth mixture, and powdered carbon adhered and scattered and deposited inside the microwave irradiation box. The sample after heating regeneration was recovered, and weight and iodine adsorption performance were measured. The measurement results are shown in Table 2. The iodine adsorption performance recovered to 530 mg/g. However, it was confirmed that there was an influence of fine powder scattering together with desorbed gas coming out from the rotating drum, making it impractical for actual equipment implementation.

### [Comparative Example 2]

Microwave heating test of Comparative Example 2 was performed in the same manner as Example 1, except that the sample was 40 g of mixed material of diatomaceous earth used for precoat filtration and filtered target substance (organic substance), and microwave was irradiated at a constant irradiation energy of 1000 W. The test was stopped because the sample ignited 470 seconds after the start of irradiation.

### [Comparative Example 3]

Microwave heating test of Comparative Example 3 was performed in the same manner as Example 1, except that the irradiation energy was changed to 500 W after irradiating microwave at 1000 W for 150 seconds. The test was stopped because the sample ignited 200 seconds after changing the irradiation energy to 500 W.

**[Table 1]**

| test conditions | Example 1 | Example 2 | Example 3 | Example 4 | Example 5 | Example 6 |
|---|---|---|---|---|---|---|
| composition of sample | mixed precoat diatomaceous earth and spent powdered activated carbon | mixed precoat diatomaceous earth and spent powdered activated carbon | mixed precoat diatomaceous earth and spent powdered activated carbon | mixed precoat diatomaceous earth and spent powdered activated carbon | spent granular activated carbon | new powdered activated carbon |
| microwave irradiation device | turntable-type BOX 400*400*400mm | turntable-type BOX 400*400*400mm | belt conveyor type 700*1500*1200mm | belt conveyor type 700*1500*1200mm | turntable-type BOX 400*400*400mm | turntable-type BOX 400*400*400mm |
| sample loading platform | 130* 130* 10mm board | 130*130*10mm board | 380*380*2mm board | 380*380*2mm board | 130*130*10mm board | 130*130*10mm board |
| material of the platform | made of quartz | made of quartz | made of SUS306 | made of SUS306 | made of quartz | made of quartz |
| charging amount | 50.31g | 70.01g | 1205g | 1200g | 50.73g | 30.18g |
| appearance | black | black | black | black | black | black |
| moisture content | 40% | 40% | 40% | 40% | 10% | 40% |
| drying step | 1.0kW/180 seconds | 1.0kW/780 seconds | 2.0kW/l, 800 seconds | 2.0kW/1740 seconds | 1.0kW/150 seconds | 1.0kW/180 seconds |
| calcination desorption step | 0.5kW/660 seconds | 1.2kW/120 seconds | 1.0kW/420 seconds | 1.0kW/420 seconds | 0.5kW/900 seconds | 0.5kW/660 seconds |
| | 0.7kW/180 seconds | - | 2.0kW/300 seconds | - | - | 0.7kW/180 seconds |
| reactivation step | 0.9kW/300 seconds | 1.4kW/900 seconds | 2.5kW/780 seconds | 3.5kW/240 seconds | - | 0.9kW/300 seconds |
| | 1.0kW/180 seconds | - | - | 4.5kW/900 seconds | - | 1.0kW/180 seconds |
| blower air volume | 4.5m³/min | 4.5m³/min | 7.5m³/min | 7.5m³/min | 4.5m³/min | 4.5m³/min |
| maximum temperature | 600°C | 800°C | 730°C | 910°C | 600°C | 600°C |
| ignition presence/absence | NO | NO | NO | NO | NO | NO |
| weight at completion | 13.98g | 20.63g | 356.9g | 314.5g | 28.28g | 9.03g |
| solid recovery rate | 27.8% | 27.5% | 29.6% | 26.2% | 55.7% | 29.9% |
| iodine adsorption performance | 170→580mg/g | 170→580mg/g | 170→530mg/g | 170→600mg/g | 790→900mg/g | 1000→1070mg/g |

**[Table 2]**

| | Comparative Example 1 | Comparative Example 2 | Comparative Example 3 |
|---|---|---|---|
| composition of sample | mixed precoat diatomaceous earth and spent powdered activated carbon | precoat diatomaceous earth | mixed precoat diatomaceous earth and spent powdered activated carbon |
| microwave irradiation device | rotating drum type BOX 400*400*400mm | turntable-type BOX 400*400*400mm | turntable-type BOX 400*400*400mm |
| sample loading platform | Φ200* 100mm cylinder | 130* 130* 10mm board | 130*130*10mm board |
| material of the platform | made of SUS306 | made of quartz | made of quartz |
| charging amount | 390.49g | 40.02g | 50.35g |
| appearance | black | white | black |
| moisture content | 40% | 30% | 40% |
| drying step | 2.0kW/660 seconds | 1.0kW/470 seconds | 1.0kW/150 seconds |
| calcination desorption step | 1.0kW/60 seconds | - | 0.5kW/200 seconds |
| | 1.2kW/210 seconds | - | - |
| reactivation step | - | - | - |
| | - | - | - |
| blower air volume | 4.5m³/min | 4.5m³/min | 4.5m³/min |
| maximum temperature | 600°C | - | - |
| ignition presence/absence | stopped due to scattering | YES | YES |
| weight at completion | 95.59g | 22.30g | 20.80g |
| solid recovery rate | 24.5% | 55.7% | 41.3% |
| iodine adsorption performance | 170→530mg/g | - | - |

| | | | |
|---|---|---|---|
| Note that the present invention is not limited to the above embodiments, and in the implementation stage, components may be modified and embodied within a range that does not depart from the gist thereof. Moreover, various inventions may be formed by appropriate combinations of multiple components disclosed in the above embodiments. For example, some components may be deleted from all components shown in the above embodiments. Furthermore, components across different embodiments may be appropriately combined. | | | |

Although the present invention has been described in detail using specific aspects, it will be apparent to those skilled in the art that various changes are possible without departing from the intent and scope of the present invention.

This application is based on Japanese Patent Application No. 2023-188705 filed on November 2, 2023, which is incorporated herein by reference in its entirety.

### Reference Signs List

1 activated carbon
2 hopper
3 board
4 transport part
5 leveling board
6 heating treatment box
7 microwave generator
8 exhaust pipe
9 propeller
10 infrared camera
11 microwave leakage prevention shutter
20 control device

## Claims

1. An activated carbon regeneration method, comprising:
a step of placing activated carbon having an average particle size of 1 to 100 µm on a flat plate; and
a step of regenerating the activated carbon on the flat plate by microwave heating.

2. The activated carbon regeneration method according to claim 1, wherein forward and backward movement of the flat plate is repeatedly performed by a belt conveyor or roller conveyor during microwave heating.

3. The activated carbon regeneration method according to claim 1, wherein a temperature of the activated carbon during microwave heating is measured, and microwave irradiation energy is controlled based on measurement results.

4. The activated carbon regeneration method according to claim 1, wherein the activated carbon is subjected to microwave heating in a heating treatment box having an oxygen concentration of 2% or less.

5. The activated carbon regeneration method according to claim 4, wherein exhaust gas from the heating treatment box is treated, and the treated gas is supplied to the heating treatment box.

6. The activated carbon regeneration method according to claim 1, wherein microwave heating is performed after making a height of the activated carbon on the flat plate constant by a leveling board.

7. An activated carbon regeneration system, comprising:
a hopper that supplies activated carbon having an average particle size of 1 to 100 µm onto a flat plate; and
a leveling board that adjusts a height of the activated carbon on the flat plate to be constant; and
a transport part that transports the flat plate on which the activated carbon is placed to a heating treatment box; and
a microwave generator that irradiates microwaves into the heating treatment box.

8. The activated carbon regeneration system according to claim 7, wherein the transport part has a belt conveyor or a roller conveyor, and repeatedly performs forward and backward movement of the flat plate on which the activated carbon is placed inside the heating treatment box during microwave irradiation.
